# EUROPÄISCHE PATENTSCHRIFT

(11) **EP 3 976 436 B1**
(45) Veröffentlichungstag und Bekanntmachung des Hinweises auf die Patenterteilung: **12.07.2023**
(21) Anmeldenummer: 20724471.6
(22) Anmeldetag: 06.05.2020
(51) Int. Cl.: B61G 3/04

(54) **ZUGKUPPLUNG**
TRACTION COUPLING
ATTELAGE DE TRACTION

(30) Priorität: 28.05.2019 DE 102019114237
(43) Veröffentlichungstag der Anmeldung: 06.04.2022
(73) Patentinhaber: Voith Patent GmbH, 89522 Heidenheim (DE)
(72) Erfinder: SHI, Minzhe, 38108 Braunschweig (DE); DEAC, Ioan, 31139 Hildesheim (DE); DEREYMAEKER, Yves, 31177 Adlum-Harsum (DE)
(74) Vertreter: Voith Patent GmbH - Patentabteilung
(86) Internationale Anmeldenummer: PCT/EP2020/062493
(87) Internationale Veröffentlichungsnummer: WO 2020/239374

(56) Entgegenhaltungen:
- DE-U- 6 902 444
- GB-A- 191 401 442
- JP-U- S5 060 707
- JP-U- S52 140 513
- US-A- 984 997
- US-A- 1 497 329
- US-A- 3 207 324

## Beschreibung

Die vorliegende Erfindung betrifft eine Zugkupplung mit einer Kupplungsstange und einem von dieser getragenen Kupplungskopf, wobei sich die Kupplungsstange in einer Axialrichtung von einem Anschlussende zu dem Kupplungskopf erstreckt und im Bereich des Anschlussendes verschwenkbar auf einem Lagerbock der Zugkupplung gelagert ist.

Eine Zugkupplung der dargestellten Art, jedoch ohne ausdrückliche Nennung des Lagerbockes, wird in EP 2 537 730 B1 offenbart. Die Zugkupplung weist einen Kupplungskopf und eine Kupplungsstange auf. Der Kupplungskopf weist eine Stoßfläche auf, die mit einem Schmiermittel geschmiert werden soll. Hierfür sind ein Schmiermittelspender und wenigstens eine an den Schmiermittelspender angeschlossene Schmiermittelleitung vorgesehen, wobei über die Leitung das Schmiermittel bis zur Stoßfläche leitbar ist. Die Schmiermittelleitung kann eine Abzweigleitung aufweisen, um weitere Funktionsflächen von beweglichen Teilen in der Kupplung zu schmieren.

Eine Schmierung der Berührungsflächen der zueinander beweglichen Teile einer Kugelgelenkverbindung ist aus US 1 497 329 A bekannt. Auch bei dieser ist eine Schmiermittelquelle am Fahrzeug vorgesehen, welche über eine entsprechende Verbindung mit dem Kontaktbereich von Kugel und hülsenartigen Element gekoppelt ist. US 984,997 offenbart die Möglichkeit der Schmierung der Verriegelung einer Fahrzeugkupplung.

EP 1 736 392 B1 offenbart ein Schmiermittelreservoir im Gelenkbolzen eines Lagerbockes einer Zugkupplung zur kontinuierlichen oder bedarfsabhängigen Schmierung der Lagerstellen. Das Reservoir ist nachfüllbar.

DE 10 2008 038 059 A1 offenbart eine Zugkupplung mit einer Kupplungsgabel und einer Kupplungslasche, wobei die Kupplungslasche ein Lager mit einem in der Kupplungslasche angebrachten Lageraußenring, einem in dem Lageraußenring drehbeweglichen Lagerinnenring und einem durch eine Bohrung des Langerinnenringes hindurchgehenden und zwei Enden aufweisenden Kupplungsbolzen aufweist. Das Lager ist mit Schmieröl geschmiert.

WO 02/02381 A2 offenbart eine Antriebseinheit, insbesondere Unterflurantriebseinheit zum Antrieb eines Radsatzes für den Einsatz in Schienenfahrzeugen, wobei eine Schmiermittelversorgungseinrichtung vorgesehen ist, die sich zu Schmiernippeln in einem Gelenkwellenkopf erstreckt.

Die genannten Zugkupplungen dienen dem Kuppeln von Fahrzeugen beziehungsweise Wagenteilen eines Schienenfahrzeugs, wobei die Kupplungen eine hohe Betriebssicherheit auch bei Kälte oder bei Umgebungsfeuchtigkeit aufweisen müssen und in der Regel Rückstelleinrichtungen vorgesehen sein sollen, die im ungekuppelten Zustand eine permanente Mittenstellfunktion der jeweiligen Zugkupplung gewährleistet. Wenn nun die Fahrzeuge zusammengefahren werden, treffen die Kupplungsköpfe der Zugkupplungen aufeinander, zentrieren sich und stellen automatisch eine sichere mechanische Verbindung der Zugkupplungen her. Insbesondere treffen gleichzeitig die Luftkupplungen aufeinander und verbinden die Luftleitungen der verschiedenen Wagen. Auch können gleichzeitig in der Zugkupplung vorgesehene Elektrokupplungen automatisch nach vorne gefahren und miteinander verbunden werden.

Das Entkuppeln kann fernbetätigt vom Fahrzeug aus erfolgen oder manuell direkt an der entsprechenden Zugkupplung. Eine Einrichtung zum automatischen Entkuppeln entriegelt die Kuppelverschlüsse, und sobald die Fahrzeuge auseinander gefahren werden, sollen die Zugkupplungen wieder kuppelbereit sein. Auch die Elektrokupplungen werden vorteilhaft automatisch getrennt und wieder jeweils nach hinten eingefahren. Gleiches gilt für die Luftkupplungen, die vorteilhaft auch automatisch getrennt werden können.

Um die Auflage- und Anlageflächen gegen Verschleiß zu schützen, ist eine ausreichende Schmierung erforderlich. In der Praxis kommt hierbei überwiegend eine konventionelle Schmierung mit in der Zugkupplung vorgesehenen verschiedenen Schmiermitteln zum Einsatz. Beispielsweise erfolgt die Schmierung durch ein Handgerät, wie beispielsweise eine Schmierfettpumpe, die manuell oder pneumatisch arbeitet, eine Fettpresse, usw. Das Schmierintervall wird in der Regel nach Vorgabe des Herstellers der jeweiligen Zugkupplung festgelegt.

Im Rahmen von kleineren Instandhaltungsmaßnahmen kann das Nachschmieren von leicht zugänglichen Schmierstellen direkt am Schienenfahrzeug, auch außerhalb einer Werkstatt, erfolgen. Hierfür müssen lediglich entsprechende Handgeräte vorhanden sein, die insbesondere als Standardausstattung im Schienenfahrzeug mitgeführt werden.

Neben dem Auffüllen der jeweils vorgesehenen Schmiermittelreservoirs über die Schmiernippel werden in der Regel auch freiliegende Stoßflächen regelmäßig geschmiert oder mit einem entsprechenden Korrosionsschutz versehen. Unter Stoßflächen werden vorliegend alle außerhalb eines Gelenkes beziehungsweise außerhalb von Bewegungsstellen vorgesehene Flächen verstanden, die entweder ungünstigen Umwelteinflüssen ausgesetzt sind oder an denen eine Krafteinleitung erfolgt, wie beispielsweise bei Druckflächen der Stempelführung am Herzstück, Druckflächen der Kolbenstangen am Herzstück und Betätigungsflächen der Nocken für Ventile und Endschalter, sowie Anschlagflächen einer Ausschlagbegrenzung, sichtbare Flächen an regenerativen Puffern, die Führungsflächen in dem Kupplungskegel und dem Kupplungstrichter, die Stoßfläche einer Kupplungsstirnplatte, der Steg einer Kuppelöse, das Hakenmaul eines Herzstückes, die Rückseite des Herzstückes, die Druckfläche der Stempelführung und die Druckfläche des Federlagers.

Bewegungsstellen, die herkömmlich und gemäß der vorliegenden Erfindung vorteilhaft regelmäßig geschmiert werden, sind zum Beispiel Laufflächen und Kolbenstangen von pneumatischen Zylindern, Klappenführungen, Drehstellen in Bolzen, Bewegungsstellen in Betätigungsgestängen und Laufflächen von Kurvenscheiben.

Obwohl die einzelnen Schritte zur Nachschmierung in der Regel in Handbüchern der Hersteller angegeben werden und auch die Vorgaben zu den Wartungsintervallen exakt sind, werden die Vorgaben nicht immer eingehalten. Dies liegt zum einen daran, dass mit der Wartung des Schienenfahrzeugs eine Ausfallzeit verbunden ist, die zu weiteren Komplikationen im Schienenverkehr und zu zusätzlichen Kosten führt. Zum anderen kann nicht sicher gewährleistet werden, dass die Nachschmierung auch mit der geforderten Sorgfalt durchgeführt wird, um das gewünschte Ergebnis zu erreichen.

In der Konsequenz tritt ein erhöhter Verschleiß bei Zugkupplungen durch mangelhafte oder fehlende Wartung auf, und zwar auch dann, wenn gemäß dem eingangs genannten Stand der Technik einzelne Schmierstellen im Zugkupplungskopf mit einer automatisierten Schmiereinrichtung geschmiert werden, weil dabei der Verschleiß an anderer Stelle in der Kraftübertragungskette einer solchen Zugkupplung auftritt.

Der vorliegenden Erfindung liegt daher die Aufgabe zugrunde, eine Zugkupplung anzugeben, bei welcher die Lebensdauer verbessert ist und Stillstandszeiten für die Wartung reduziert werden.

Die erfindungsgemäße Aufgabe wird durch eine Zugkupplung mit den Merkmalen von Anspruch 1 gelöst. In den abhängigen Ansprüchen werden vorteilhafte und besonders zweckmäßige Ausgestaltungen der Erfindung angegeben.

Eine erfindungsgemäße Zugkupplung weist eine Kupplungsstange und einen von der Kupplungsstange getragenen Kupplungskopf auf. Die Kupplungsstange erstreckt sich in einer Axialrichtung von einem Anschlussende bis zu dem Kupplungskopf und ist im Bereich des Anschlussendes verschwenkbar auf einem Lagerbock der Zugkupplung gelagert.

Erfindungsgemäß ist eine Schmiereinrichtung vorgesehen, die wenigstens eine Schmiermittelquelle und wenigstens eine an der Schmiermittelquelle schmiermittelleitend angeschlossene Schmiermittelleitung umfasst, zum Schmieren von Stoßstellen und/oder Bewegungsstellen in der Zugkupplung.

Erfindungsgemäß werden mit der wenigstens einen Schmiereinrichtung Stoßstellen und/oder Bewegungsstellen von verschiedenen Komponenten der Zugkupplung aus der folgenden Gruppe von Komponenten geschmiert:
- Kupplungsstange
- Kupplungskopf
- Lagerbock.

Dadurch, dass nun wenigstens zwei der genannten verschiedenen Komponenten oder vorteilhaft alle drei der genannten Komponenten mit der Schmiereinrichtung geschmiert werden, kann der Verschleiß in allen Komponenten der Kraftübertragungskette einer Zugkupplung reduziert werden, sodass die Lebensdauer der Zugkupplung insgesamt verlängert wird und Stillstandszeiten für die Wartung reduziert werden.

Erfindungsgemäß ist wenigstens eine gemeinsame Schmiermittelquelle zur Schmierung von Stoßstellen und/oder Bewegungsstellen verschiedener Komponenten der Gruppe von Komponenten vorgesehen. Das bedeutet, dass aus einer einzigen zentralen Schmiermittelquelle Stoßstellen und/oder Bewegungsstellen verschiedener Komponenten geschmiert werden, über entsprechend vorgesehene komponentenübergreifende Schmiermittelleitungen.

Erfindungsgemäß ist zwischen der Schmiermittelquelle und den verschiedenen Stoßstellen und/oder Bewegungsstellen einer Komponente und/oder verschiedener Komponenten wenigstens ein Schmiermittelverteiler vorgesehen.

Erfindungsgemäß können entsprechend mehrere Schmiermittelverteiler vorgesehen sein, wobei insbesondere jeder Komponente ein eigener Schmiermittelverteiler zugeordnet ist. Jeder Schmiermittelverteiler weist eine vergleichsweise größere Anzahl von Schmiermittelableitungen als Schmiermittelzuleitungen auf, um die Verteilfunktion zu ermöglichen.

Erfindungsgemäß erfolgt die Anordnung der zentralen Schmiermittelquelle dabei entweder an einer der Komponenten der Zugkupplung oder aber vorzugsweise an der Anschlussumgebung, insbesondere am die Kupplung tragenden Schienenfahrzeug. Erstere Möglichkeit bietet den Vorteil, die Zugkupplung mit dem Schmiermittelversorgungssystem als komplett vormontierte Einheit bereitzustellen, wobei die Schmiermittelversorgung unabhängig von der Anschlussumgebung erfolgt.

Die Anordnung der zentralen Schmiermittelquelle an der Kupplungsumgebung, insbesondere dem Schienenfahrzeug bietet den Vorteil, dass die Erhöhung des Gewichtes an der Kupplung durch das Schmiermittelsystem, was bei der Auslegung der Kupplung mit zu berücksichtigen ist, nur auf die notwendigen Komponenten, wie Verteiler und Schmiermittelleitungen beschränkt ist, und das Hauptgewicht am Fahrzeug abgestützt wird. Insbesondere kann am Fahrzeug ein zentrales Schmiermittelreservoir angeordnet sein, welches die einzelnen Komponenten der Kupplung über entsprechende Schmiermittelleitungen versorgt. Diese Schmiermittelquelle kann dabei gemäß einer ersten Ausbildung autark, d.h. nur der Kupplung zugeordnet sein. In diesem Fall kann die Schmiermittelquelle in einer Weiterbildung mit einer Serviceeinheit zum Wenigstens mittelbaren Anzeigen einer erforderlichen Nachbefüllung und zur Realisierung der Nachbefüllung selbst ausgestaltet sein.

Des Weiteren ist mit einer derartigen Anordnung in einer zweiten Ausbildung eine Einbindung in ein Schmiermittelversorgungsgesamtsystem am Schienenfahrzeug einfacher möglich. Die Schmiermittelquelle kann dabei von einer dem Fahrzeug zugeordneten zentralen Schmiermittelquelle gebildet werden, wobei die Versorgung der zentralen Schmiermittelquelle der Kupplung aus dieser erfolgt, beispielsweise über einen Verteiler am Fahrzeug. Die Versorgung kann dabei automatisiert vorgenommen werden.

Gemäß einer weiteren Ausführungsform der Erfindung ist je Komponente aus der genannten Gruppe von Komponenten jeweils eine Schmiermittelquelle vorgesehen. Das bedeutet, es ist wenigstens eine Schmiermittelquelle für die Kupplungsstange vorgesehen, ferner wenigstens eine Schmiermittelquelle für den Kupplungskopf und ferner wenigstens eine Schmiermittelquelle für den Lagerbock. Die Schmiermittelmengen können somit besser komponentenabhängig ausgelegt werden und die Leitungsverbindungen zu den Schmierstellen sehr kurz gehalten werden.

Bevorzugt ist die jeweilige Schmiermittelquelle an der jeweiligen Komponente befestigt oder in die jeweilige Komponente integriert. Beispielsweise ist ein Schutzgehäuse vorgesehen, das die Schmiermittelquelle und insbesondere eine Steuervorrichtung aufnimmt, welche die Schmiermittelabgabe aus der Schmiermittelquelle steuert. Die Steuervorrichtung kann einen Antrieb und/oder einer Fördereinrichtung für das Schmiermittel aus der Schmiermittelquelle umfassen. Die Steuervorrichtung kann ein Ventil umfassen.

Die Schmiermittelleitungen in allen Fällen können zum Beispiel Durchgänge und/Kanäle in Bauteilen und/oder flexible Schlauchleitungen und/oder starre Leitungen an Bauteilen und/oder zwischen Bauteilen umfassen.

Gemäß einer Ausführungsform der Erfindung sind die Schmiermittelquellen mit den jeweils daran angeschlossenen Schmiermittelleitungen verschiedener Komponenten voneinander getrennt. Das bedeutet, dass den zwei Komponenten oder drei Komponenten jeweils wenigstens eine eigene Schmiermittelquelle zugeordnet ist, mit einer oder mehreren dieser Schmiermittelquelle zugeordneten Leitungen, die zu der wenigstens einen oder den mehreren Stoßstellen und/oder Bewegungsstellen in der Komponente führt/führen. Hingegen gibt es keine Verbindung zwischen der oder den Schmiermittelquellen und Schmiermittelleitungen der einen Komponente und den Schmiermittelquellen und Schmiermittelleitungen beziehungsweise Stoßstellen und/oder Bewegungsstellen der anderen Komponenten.

Bevorzugt ist zwischen der wenigstens einen Schmiermittelquelle und verschiedenen Stoßstellen und/oder Bewegungsstellen einer Komponente und/oder verschiedener Komponenten wenigstens ein Schmiermittelverteiler vorgesehen. Bevorzugt sind entsprechend mehrere Schmiermittelverteiler vorgesehen, wobei insbesondere jeder Schmiermittelquelle ein eigener Schmiermittelverteiler zugeordnet ist. Jeder Schmiermittelverteiler weist eine vergleichsweise größere Anzahl von Schmiermittelableitungen als Schmiermittelzuleitungen auf, um die Verteilfunktion zu ermöglichen.

Besonders bevorzugt ist wenigstens eine Steuervorrichtung vorgesehen, die eingerichtet ist, die Schmiermittelabgabe aus der wenigstens einen Schmiermittelquelle zu steuern, sodass die Schmiermittelabgabe kontinuierlich erfolgt. Gemäß einer alternativen Ausführungsform ist die Steuervorrichtung derart eingerichtet, dass die Schmiermittelabgabe aus der wenigstens einen Schmiermittelquelle in regelmäßigen Intervallen oder auch diskontinuierlich in Abhängigkeit einer Bedarfsanforderung erfolgt. Die Bedarfsanforderung kann beispielsweise durch einen an der jeweiligen Stoßstelle und/oder Bewegungsstelle angeschlossenen, einen Schmiermittelzustand an der Stoßstelle und/oder Bewegungsstelle erfassenden Schmiermittelsensor erfolgen und/oder durch einen Drucksensor in einer Schmiermittelleitung.

Im Folgenden wird eine nicht abschließende beispielhafte Liste für Stoßstellen und/oder Bewegungsstellen in einer Zugkupplung genannt, die bevorzugt mit der Schmiereinrichtung in der Zugkupplung gemäß der vorliegenden Erfindung geschmiert werden können. Dabei können einzelne Stoßstellen und/oder Bewegungsstellen isoliert geschmiert werden oder eine gemeinsame Schmierung ist möglich. Bevorzugt wird zumindest wenigstens eine der genannten Stoßstellen und/oder Bewegungsstellen geschmiert:
- eine oder mehrere Gelenke oder Drehstellen zwischen zwei Bauteilen der Zugkupplung;
- eine oder mehrere Bewegungsstellen zwischen zwei relativ zueinander in der Axialrichtung oder senkrecht oder winklig hierzu beweglichen Bauteilen;
- eine oder mehrere Bewegungsstellen zwischen zwei relativ zueinander in Umfangsrichtung zu der Axialrichtung beweglichen Bauteilen;
- eine oder mehrere Bewegungsstellen an Betätigungsmechanismen einer oder mehrerer in den Kupplungskopf integrierter Komponenten wie eine Elektrokupplung und/oder eine Luftkupplung;
- eine oder mehrere Außenflächen an einer oder mehrerer Komponenten;
- eine oder mehrere Innenflächen an einer oder mehreren Komponenten;
- einen oder mehrere Innenräume.

Die Schmiereinrichtung kann beispielsweise wenigstens einen Schmiermittelsprühkopf zum Besprühen einer Fläche mit Schmiermittel umfassen. Ein solcher Sprühkopf eignet sich besonders für Innenflächen oder Außenflächen einer oder mehrere Komponenten oder für Bewegungsstellen, die eine vergleichsweise große zu schmierende Oberfläche aufweisen.

Die Schmiereinrichtung kann gemäß einer Ausführungsform vorteilhaft einen Punktschmiermittelgeber umfassen. Mit einem solchen Punktschmiermittelgeber kann das Schmiermittel auf einem punktförmigen und/oder linienförmigen Bereich abgegeben werden. Ein solcher Punktschmiermittelgeber eignet sich zum Beispiel besonders für Gelenke oder Drehstellen, aber auch für Gleitflächen in Teleskopverbindungen.

Um ein Einfrieren der Schmiermittelquelle oder des Schmiermittels in einer Schmiermittelleitung zu vermeiden oder um eine unerwünscht große Viskosität beim Schmiermittel zu vermeiden, kann die wenigstens eine Schmiermittelquelle und/oder Schmiermittelleitung eine Heizeinrichtung zum Aufheizen des Schmiermittels umfassen.

Gemäß einer besonders bevorzugten Ausführungsform der Erfindung umfasst die Schmiereinrichtung wenigstens einen Drucksensor. Der Drucksensor erfasst einen Schmiermitteldruck in der Schmiermittelquelle oder einer Schmiermittelleitung, insbesondere unmittelbar vor oder im Bereich eines Schmiermittelverteilers. Damit kann erfasst werden, wenn die Schmiermittelquelle zur Neige geht und bevorzugt ausgetauscht oder aufgefüllt werden sollte.

Insbesondere ist eine Warneinrichtung vorgesehen, die eingerichtet ist, einen Nachfüllbedarf der wenigstens einen Schmiermittelquelle und/oder einen Fehlzustand der Schmiereinrichtung anzuzeigen. Eine solche Warneinrichtung kann insbesondere die von dem wenigstens einen Drucksensor übermittelten Signale empfangen, um hieraus einen Nachfüllbedarf und/oder einen Fehlzustand zu erfassen.

Die Kommunikation des Drucksensors und/oder der Warneinrichtung beziehungsweise wenigstens einer der hier genannten Steuervorrichtungen kann drahtgebunden oder drahtlos, dann beispielsweise durch WiFi, Infrarot, Funk, Bluetooth, etc. erfolgen. Die Steuervorrichtungen und/oder die Warneinrichtung arbeitet/arbeiten insbesondere vollautomatisch, das heißt ohne notwendigen Eingriff eines Fahrzeugführers oder von anderem Personal.

Das Schmierungsintervall, die Schmiermittelmenge für die jeweilige Stoßstelle und/oder Bewegungsstelle und ein entsprechendes Schmierkonzept kann nach Bedarf individuell vorgegeben werden und insbesondere in der wenigstens einen Steuervorrichtung programmiert werden. Es kann eine externe Schnittstelle zu einem übergeordneten Steuersystem vorgesehen sein, um die Steuerung zu optimieren und/oder Daten auszulesen.

Der Punktschmiermittelgeber und/oder der Schmiermittelsprühkopf können beispielsweise einen elektrischen Antrieb zum Abgeben des Schmiermittels umfassen. Alternativ erfolgt die Schmiermittelabgabe beim Punktschmiermittelgeber durch Schwerkraft oder einen in der Schmiereinrichtung vorgesehenen Überdruck.

Der Schmiermittelsprühkopf kann zum Beispiel einen Schmiermittelnebel, insbesondere Ölnebel, erzeugen. Der Punktschmiermittelgeber kann insbesondere Schmiermittel, beispielsweise Öl, in Tropfenform abgeben.

Als Schmiermittel kommt vorteilhaft Öl, jedoch auch Schmierfett in Betracht, das eine vergleichsweise größere Zähigkeit als Öl aufweist. Verschiedene Schmiermittelquellen können verschiedene Schmiermittel umfassen, beispielsweise Öl und Fett.

Die erfindungsgemäße Schmiereinrichtung kann auch mit herkömmlichen Schmiernippeln und manueller Schmierung kombiniert werden.

Das Schmiermittel kann auch Korrosionsschutzmittel umfassen.

Zusätzlich zum Schmiermittel kann ein Reinigungsmittel vorgesehen sein, um Bauteile vor dem Schmieren zu reinigen oder um nicht schmierbedürftige Bauteile nur zu reinigen.

Die Kapazität der verschiedenen Schmiermittelquellen kann voneinander abweichen und an den jeweiligen Anwendungsfall angepasst sein.

Zum Leiten von Schmiermittel innerhalb der Schmiermittelleitungen beziehungsweise zu den Stoßstellen und/oder Bewegungsstellen können elektromotorische Antriebe, hydraulische Antriebe oder pneumatische Antriebe vorgesehen sein. Auch kommt die Erzeugung eines Antriebsdrucks mittels eines Druckspeichers in Betracht. Ein mechanischer Antrieb oder ein Gasantrieb kann beispielsweise einen Druck von 2 bis 8 bar erzeugen, insbesondere von 5 bar. Ein elektrischer Antrieb kann zum Beispiel wesentlich höhere Drücke erzeugen, beispielsweise von mehr als 10 bar oder 20 bar, insbesondere von 30 bar oder mehr. Bei einem solchen elektrischen Antrieb kommt insbesondere eine Kolbenpumpe oder Rotationspumpe in Betracht. Bei einem mechanischen Antrieb kann beispielsweise ein federbelasteter Kolben vorgesehen sein, bei einem gasbetriebenen Antrieb beispielsweise ein gasbelasteter Kolben oder einfach eine Schmiermitteldruckraum mit Gasdruck.

Die Schmiereinrichtung kann Sensoren umfassen, die einen ordnungsgemäßen Betrieb erfassen. Neben dem genannten wenigstens einen Drucksensor kommen beispielsweise Temperatursensoren in Betracht.

Als Energiequelle für die Schmiereinrichtung kommen Batterien, Akkumulatoren oder auch ein elektrisches Bordnetz in Betracht.

Die Zugkupplung kann zum Beispiel als Mittelpufferkupplung, automatische Zugkupplung, AAR-Kupplung, Kupplung mit Willison-Profil, Knickkupplung oder teleskopierbare Kupplung ausgeführt sein. Auch eine Kombination von mehreren Kupplungstypen ist möglich. Die Liste ist nicht abschließend.

Die AAR-Kupplung kommt beispielsweise in den USA zum Einsatz. AAR ist die Abkürzung der Normenorganisation Association of American Railroads.

Ein weiteres Ausführungsbeispiel einer Zugkupplung ist eine UIC-Mittelpufferkupplung.

Durch die Erfindung kann ein Wartungsintervall für die Zugkupplung wesentlich vergrößert werden. Hierdurch werden Personalkosten und Stillstandszeiten reduziert.

Die den Bewegungsstellen und/oder Stoßstellen zugeführte Schmiermittelmenge kann nach Bedarf gezielt eingestellt werden und verhindert ein Überschmieren. Dies hilft Schmiermittel zu sparen und schont die Umwelt.

Da keine schwer zugängigen Schmierstellen mehr per Hand geschmiert werden müssen, wird die Arbeitssicherheit verbessert.

Wie dargelegt, kann ein Nachfüll-Warnsignal erzeugt werden, das im Fahrerraum und/oder am Kupplungsbereich erkennbar ist. Hierdurch wird der Service vereinfacht.

Bevorzugt ist die Schmiereinrichtung als geschlossener Kreislauf ausgeführt. Dadurch treten keine Verunreinigungen im Schmiermittel oder durch Schmiermittel auf.

Trockenlauf wird durch die genau dosierbare Schmiermittelmenge sicher vermieden. Damit wird die Lebensdauer der Komponenten vergrößert.

Ein Schmierungsverfahren kann an die jeweilige Stoßstelle und/oder Bewegungsstelle angepasst werden, wobei parallele Schmiermittelquellen vorgesehen werden können, zum Beispiel mit einem dickflüssigen Schmierfett aus einer ersten Schmiermittelquelle und mit einem Schmieröl aus einer zweiten Schmiermittelquelle, die insbesondere an einen oder mehrere Schmiermittelsprühköpfe angeschlossen ist.

Das Vorsehen wenigstens eines Schutzgehäuses um die wenigstens eine Schmiermittelquelle schützt vor Witterungsbedingungen und Verschmutzung.

Die erfindungsgemäße Schmiereinrichtung ist äußerst flexibel einsetzbar und ermöglicht neue Konstruktionen von Zugkupplungen, da die Schmierstellen nicht mehr von Hand zugängig sein müssen.

Der jeweilige Schmierstoffgeber kann nahe an der zu schmierenden Stelle - Stoßstelle und/oder Bewegungsstelle - positioniert werden. Auch Schmiernippel können mit der Schmiereinrichtung versorgt werden.

Die Füllmenge der Schmiermittelquellen ist leicht zu kontrollieren.

Gemäß einer Ausführungsform der Erfindung wird das Schmieren mit einem Reinigen kombiniert. Hierfür kann die Schmiereinrichtung eine Reinigungsvorrichtung umfassen, welche vor dem Aufbringen von Schmiermittel die entsprechende Stoßstelle und/oder Bewegungsstelle reinigt, beispielsweise mittels Aufsprühen eines Reinigungsmittels. Dabei können gegebenenfalls dieselben Sprühköpfe verwendet werden.

Die Erfindung soll nachfolgend anhand von Ausführungsbeispielen und den Figuren exemplarisch beschrieben werden.

Es zeigen:
- Figur 1: eine schematische Darstellung einer Zugkupplung mit drei Komponenten, für die jeweils wenigstens eine separate Schmiermittelquelle oder wenigstens eine gemeinsame Schmiermittelquelle vorgesehen sein kann und deren Stoßstellen und Bewegungsstellen mittels einer erfindungsgemäßen Schmiereinrichtung geschmiert werden;
- Figur 2: eine Darstellung analog der Figur 1 ebenfalls mit drei Komponenten, für die jeweils wenigstens eine separate Schmiermittelquelle oder wenigstens eine gemeinsame Schmiermittelquelle vorgesehen sein kann und deren Stoßstellen und Bewegungsstellen mittels einer erfindungsgemäßen Schmiereinrichtung geschmiert werden;
- Figur 3a: Beispiele für eine Schmiereinrichtung mit Schmiermittelsprühköpfen;
- Figur 3b: Beispiel für eine besonders vorteilhafte Ausbildung mit einer zentralen Schmiereinrichtung und Anordnung der zentralen Schmiermittelquelle am Fahrzeug;
- Figur 4: ein Ausführungsbeispiel einer in einem Schutzgehäuse zusammen mit einer Steuervorrichtung und Antriebseinheit positionierten Schmiermittelquelle, die Schmiermittel über einen Schmiermittelverteiler zu den Stoßstellen und/oder Bewegungsstellen führt;
- Figur 5: ein Ausführungsbeispiel für eine Stoßstelle im Kuppelverschluss des Kupplungskopfes, wobei die Stoßstelle mit Schmiermittel aus einem Schmiermittelsprühkopf besprüht wird;
- Figur 6: ein Ausführungsbeispiel einer Schmiermittelquelle mit aufgesetzter Steuervorrichtung, die Schmiermittel über eine Schmiermittelleitung zu einem Schmiermittelsprühkopf führt;
- Figur 7: eine schematische Darstellung einer an einer Kupplungsstange angeschlossenen Schmiermittelquelle, die Schmiermittel über eine Schmiermittelleitung zu einer Vielzahl von punktförmigen Schmiermittelgebern führt im zusammengebauten Zustand und in Explosionsdarstellung;
- Figur 8: vorteilhafte Schmierstellen im Bereich eines Kupplungskopfes;
- Figur 9: weitere Schmierstellen im Bereich des Kupplungskopfes;
- Figur 10: beispielhafte Schmierstellen im Bereich des Hauptbolzens eines Zugkupplungskopfes;
- Figur 11: eine Schmierstelle an der Gleitfläche des regenerativen Energieverzehrelementes in der Kupplungsstange;
- Figur 12: beispielhafte Schmierstellen im Bereich einer teleskopischen Kupplung;
- Figur 13: beispielhafte Schmierstellen im Bereich einer Kupplung mit Knickgelenk;
- Figur 14: beispielhafte Schmierstellen im Lagerbock;
- Figur 15: beispielhafte Schmierstellen an einer Betätigung einer Elektrokupplung;
- Figur 16: beispielhafte Schmierstellen im Bereich der Mittenstellung und Abstützung einer Zugkupplung;
- Figur 17: beispielhafte Schmierstellen im Bereich der Kupplungsstange;
- Figur 18: beispielhafte Schmierstellen an einer Elektrokupplung;
- Figur 19: ein Ausführungsbeispiel einer gemeinsamen Schmiermittelquelle für verschiedene Schmierstellen im Bereich einer Lagerbockes.

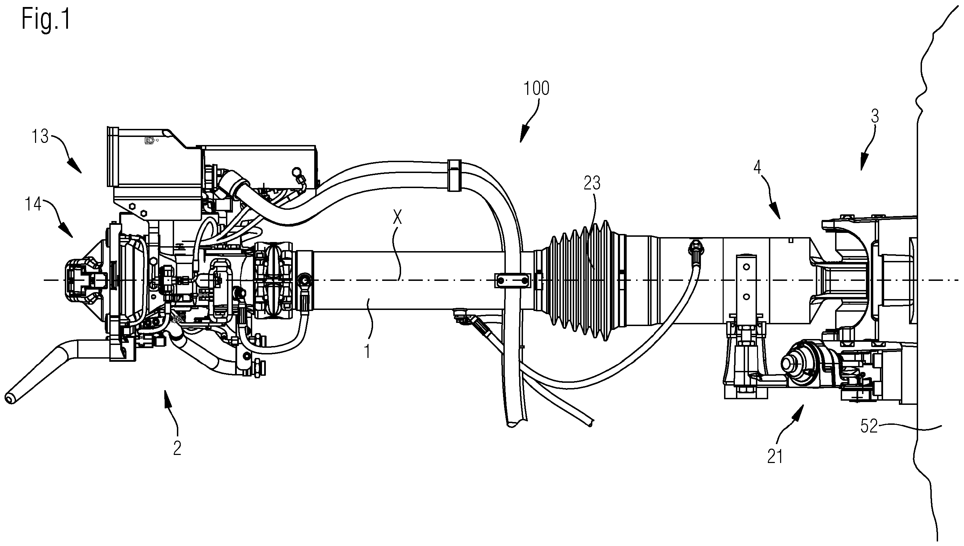

In der Figur 1 ist eine seitliche Ansicht einer Zugkupplung 100 mit erfindungsgemäßer Zuordnung einer zentralen Schmiermittelversorgung gezeigt. Die Zugkupplung 100 weist eine Kupplungsstange 1, einen Kupplungskopf 2 und eine Anlenkung bzw. Abstützung mit einem Lagerbock 3 auf. Die Kupplungsstange 1 erstreckt sich von ihrem Anschlussende 4 am Lagerbock 3 bis zu dem Kupplungskopf 2. Der Lagerbock 3 dient dabei der Befestigung bzw. Lagerung an einem hier im Einzelnen nicht dargestellten Wagen eines Fahrzeugs, insbesondere Schienenfahrzeugs 52.

Der Begriff Lagerbock 3 ist sehr weit zu verstehen. Bei diesem kann es sich insbesondere um einen speziell ausgebildeten Lagerbock aus Lagerschalen und Flanschbereichen handeln oder aber eine Platte.

Am Kupplungskopf 2 sind ferner stirnseitig eine Elektrokupplung 13 und eine Luftkupplung 14 vorgesehen. Ferner weist der Kupplungskopf 2 eine mechanische Kupplung auf, die einen Kegel und einen Trichter umfasst, sodass der Kupplungskopf 2 mit einem gegengleichen Kupplungskopf 2 eines anderen Wagens mechanisch verriegelt werden kann.

Die Kupplungsstange 1 erstreckt sich in der Axialrichtung x, welche der Richtung der Längsachse des entsprechenden Schienenfahrzeugs 52 entspricht.

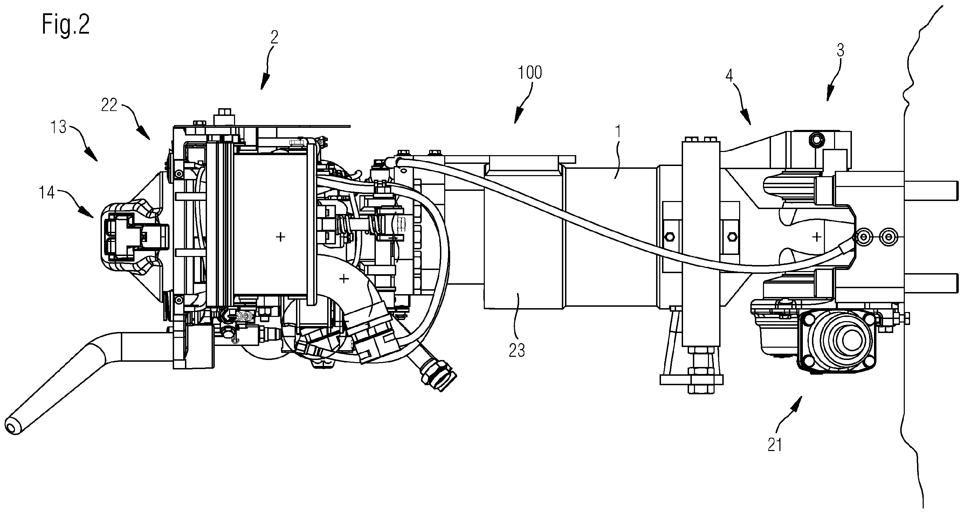

In der Figur 2 ist eine ähnliche Zugkupplung 100 gezeigt, wobei in den Figuren sich entsprechende Bauteile mit den sich entsprechenden Bezugszeichen bezeichnet sind. In den Figuren 1 und 2 erkennt man ferner besonders eine Mittenrückstellung 21, die Bestandteil des Lagerbockes 3 ist und die die Längsachse der Kupplungsstange 1 mit der Axialrichtung x mit der entsprechenden Axialrichtung beziehungsweise Längsachse des Schienenfahrzeugs ausrichtet.

Ferner ist in Figur 2 der Hauptbolzen 22 des Kupplungskopfes 2 besser als in der Figur 1 erkennbar.

Sowohl bei der Ausgestaltung gemäß der Figur 1 als auch bei der Ausgestaltung gemäß der Figur 2 weist die Kupplungsstange 1 ein Energieverzehrelement 23 auf, welches Stoßenergie aufnimmt. Das Energieverzehrelement 23 ist insbesondere reversibel. Denkbar sind jedoch auch Kombinationen aus reversiblen und irreversiblen Energieverzehr.

Bevorzugt werden Stoßstellen und/oder Bewegungsstellen sowohl der Kupplungsstange 1 als auch des Kupplungskopfes 2 und des Lagerbockes 3 mit einer erfindungsgemäßen Schmiereinrichtung, die in den Figuren 1 und 2 noch nicht im Einzelnen dargestellt ist, geschmiert.

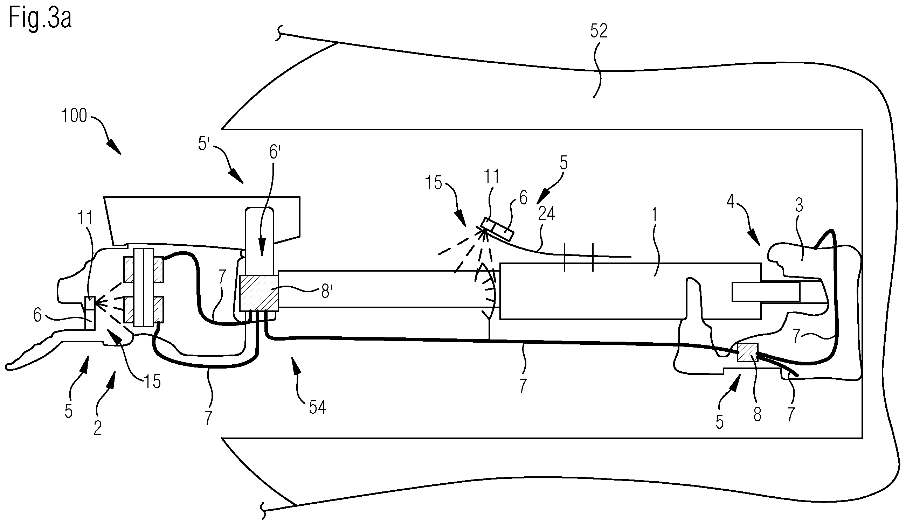

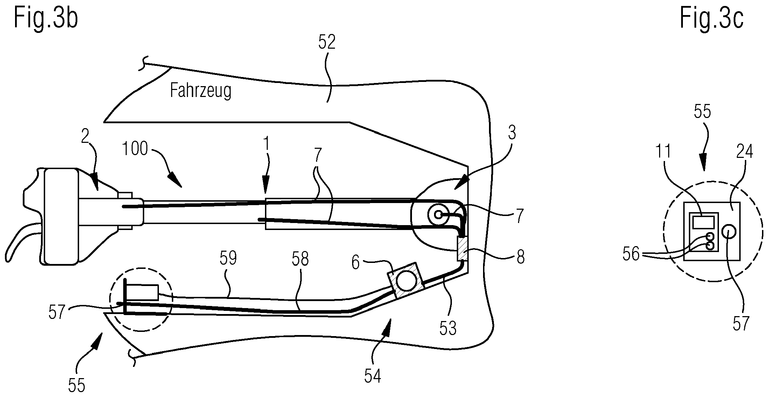

Die Figuren 3a und 3b beschreiben am Beispiel zweier Ausbildungen das Grundprinzip und den prinzipiellen Aufbau erfindungsgemäßer Ausführungen von Zugkupplungen 100 mit Schmiermittelbereitstellungssystemen.

Die Figur 3a zeigt beispielhaft eine Ausführung mit den einzelnen Komponenten zugeordneten Schmiereinrichtungen 5 mit jeweils eigener Schmiermittelquelle 6. In der Figur 3a sind beispielsweise bei einer entsprechenden Zugkupplung 100 exemplarisch drei Schmiereinrichtungen 5 gezeigt, die jeweils mit einer Schmiermittelquelle 6 und integrierter Steuervorrichtung 11 ausgestattet sind, wobei eine Schmiereinrichtung 5 im Bereich des Kupplungskopfes 2 vorgesehen ist, eine Schmiereinrichtung 5 im Bereich der Kupplungsstange 1 und eine Schmiereinrichtung 5 im Bereich des Lagerbockes 3 (bei der Schmiereinrichtung 5 im Bereich des Lagerbockes 3 sind die einzelnen Komponenten aufgrund der Draufsicht von hinten nicht im Einzelnen erkennbar). Die einzelnen Schmiereinrichtungen 5 dienen dabei jeweils der Versorgung einer oder mehrerer Stoßstellen und/oder Bewegungsstellen an den einzelnen Komponenten 1, 2 und 3. Diese sind Bestandteil eines zentralen Schmiermittelbereitstellungssystems 54, welches die Funktion einer zentralen Schmiereinrichtung übernimmt. Dieses umfasst ferner eine weitere Schmiereinrichtung 5' mit einer Schmiermittelquelle 6', welche unterschiedliche Komponenten mit Schmiermittel versorgt. Hier versorgt die Schmiermittelquelle 6' den Kupplungskopf 2 über die Schmiermittelleitungen 7 an einzelnen Stoß- und/oder Bewegungsstellen und den Lagerbock 3 über einen Schmiermittelverteiler 8 an wenigstens zwei Stoß- oder Bewegungsstellen über Schmiermittelleitungen 7 jeweils mit Schmiermittel. Die Schmiermittelquelle 6' ist dazu am Kupplungskopf 2 angeordnet und über einen Schmiermittelverteiler 8' mit den Schmierstellen am Kupplungskopf 2 und dem Lagerbock 3 gekoppelt.

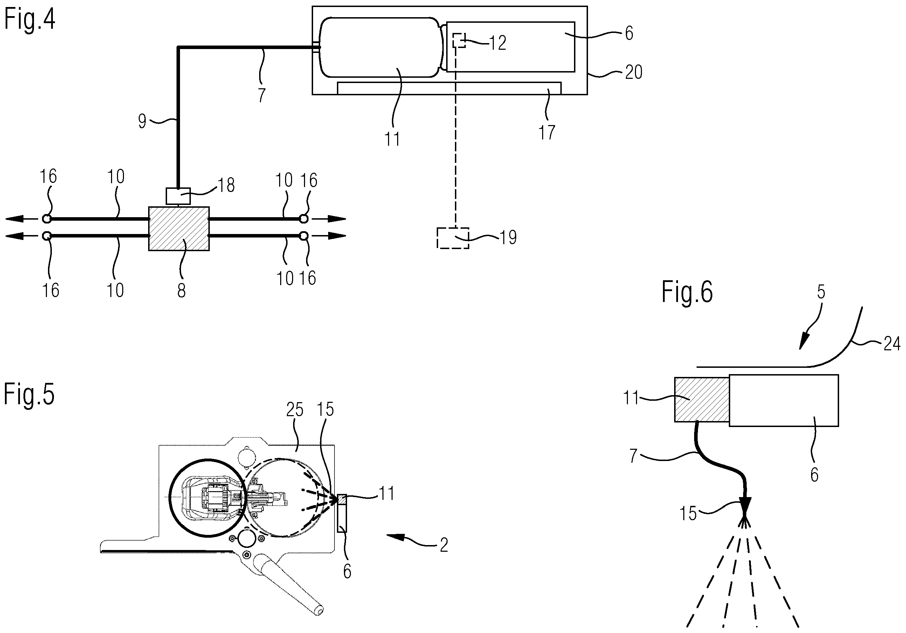

Eine beispielhafte Ausgestaltung für die Schmiereinrichtungen 5 aus der Figur 3a ist in der Figur 6 gezeigt. Wie man sieht, ist die Schmiereinrichtung 5 beispielsweise an einer Halterung 24 befestigt oder könnte auch ein eigenes Schutzgehäuse aufweisen. Die Steuervorrichtung 11 steuert die Schmiermittelmenge, die von der Schmiermittelquelle 6 zu der Schmiermittelleitung 7 und von dort zum Schmiermittelsprühkopf 15 geleitet wird.

Die Steuervorrichtung 11 könnte auch einen entsprechenden Antrieb umfassen, falls die Schmiermittelquelle nicht mit einem Druck vorgespannt ist.

Die in der Figur 3a einzeln bezifferten Schmiereinrichtungen 5 können vorteilhaft als verteilt angeordnete, integrierte Schmiereinrichtung angesehen werden, die verschiedene Schmiermittelquellen 6 aufweist, sodass die einzeln mit 5, 5' bezeichneten Bauteile Teile der Gesamtschmiereinrichtung bzw. des Schmiermittelbereitstellungssystems 54 sind.

Die Figur 3b zeigt eine besonders vorteilhafte Ausführung mit einer zentralen Schmiermittelversorgung über eine an der Anschlussumgebung der Zugkupplung 100 am Fahrzeug 52, insbesondere Schienenfahrzeug angeordnete zentrale Schmiermittelquelle 6. Die Anordnung erfolgt im dargestellten Fall beispielsweise direkt am Wagenkasten oder einem mit diesem verbundenen Bauteil. Die zentrale Schmiermittelquelle 6 ist über eine sogenannte Hauptschmierleitung 53 mit einem Schmiermittelverteiler 8 verbunden, über welchen das Schmiermittel zu den einzelnen Komponenten Kupplungskopf 2, Kupplungsstange 1 und Lagerbock 3 mittels entsprechender Schmiermittelleitungen 7 transportiert wird. Im dargestellten Fall ist beispielhaft jeweils zumindest eine Schmiermittelleitung 7 zu jeweils einer Komponente vorgesehen. An den einzelnen Komponenten - Kupplungskopf 2, Kupplungsstange 1 und Lagerbock 3 - können ebenfalls wieder hier im Einzelnen nicht dargestellte Schmiermittelverteiler vorgesehen werden, die das Schmiermittel dann an unterschiedliche Bewegungs- und/oder Stoßstellen an den jeweiligen Komponenten 1, 2, 3 leiten.

Des Weiteren ist in vorteilhafter Weise dem Schmiermittelbereitstellungssystem 54, insbesondere der Schmiermittelquelle 6 eine Serviceeinheit 55 zum Überwachen des Schmiermittelvorrats in der Schmiermittelquelle 6 und/oder zur Realisierung des Nachbefüllens. Diese kann beispielhaft, wie in Figur 3c wiedergegeben, aufgebaut sein. Dazu weist diese eine Steuereinrichtung 11 auf, welche mit einer Einrichtung zum zumindest mittelbaren Erfassen des Schmiermittelvorrates der Schmiermittelquelle 6 gekoppelt ist, wobei die Kopplung drahtlos oder wie in Figur 3b wiedergegeben via Kabel 59 gekoppelt ist. Die Steuervorrichtung 11 dient der Verarbeitung des Signals und im einfachsten Fall wird eine entsprechende Anzeige 56 ausgelöst, die ein erforderliches befüllen kenntlich macht. Dabei kann die Anzeige zum Beispiel das Erreichen einer notwendigen Mindestmenge in der Schmiermittelquelle 6 anzeigen. Die Serviceeinheit 55 weist ferner vorzugsweise einen Anschluss 57 zur Nachbefüllung auf, welcher beispielsweise über eine Leitung 58 mit der Schmiermittelquelle 6 verbunden ist. Die Serviceeinheit 55 ist mit Abstand zur Schmiermittelquelle 6 angeordnet und erlaubt aufgrund ihrer möglichen Verbindungen zu dieser die Anordnung der Schmiermittelquelle 6 auch in weniger zugängigen Bereichen.

Denkbar wäre es auch, die Nachbefüllung direkt an der Schmiermittelquelle 6 bei entsprechender Zugängigkeit vorzunehmen.

In der Figur 4 ist exemplarisch eine alternative Ausgestaltung für die Zufuhr von Schmiermittel aus einer Schmiermittelquelle 6 zu entsprechenden Schmierstellen (Stoßstellen und/oder Bewegungsstellen in der Zugkupplung) gezeigt. Die Schmiermittelquelle 6 ist beispielsweise in Form einer Kartusche mit Schmierfett vorgesehen, die in einem Schutzgehäuse 20 positioniert ist. Im Schutzgehäuse 20 ist ferner die Steuervorrichtung 11 positioniert, die wiederum eine integrierte Antriebseinrichtung und/oder Ventileinrichtung für das Schmiermittel aufweisen kann. Ferner weist das Schutzgehäuse 20 eine Heizeinrichtung 17 auf, um die Schmiermittelquelle 6 und bevorzugt auch das in der Antriebseinrichtung/Ventileinrichtung der Steuervorrichtung 11 befindliche Schmiermittel aufzuheizen.

Das Schmiermittel aus der Schmiermittelquelle 6 wird über die Schmiermittelleitung 7 einem Schmiermittelverteiler 8 zugeführt, der neben der Schmiermittelzuleitung 9 hier beispielsweise vier Schmiermittelableitungen 10 aufweist, wobei jede Schmiermittelableitung 10 zu einer eigenen Stoßstelle und/oder Bewegungsstelle führen kann oder mehrere Schmiermittelableitungen 10 zur selben Stoßstelle und/oder Bewegungsstelle führen können.

Die Schmiermittelzuleitung 9 wird vom letzten Abschnitt der hier gezeigten Schmiermittelleitung 7 gebildet und weist einen Drucksensor 18 auf, mit dem ein Druckabfall festgestellt werden kann, wenn das Schmiermittel aus der Schmiermittelquelle 6 zur Neige geht und dementsprechend die Schmiermittelleitung 7 nicht mehr mit einem entsprechend hohen Druck mit Schmiermittel befüllt ist. Zusätzlich oder alternativ könnte auch, wie durch die gestrichelten Linien angedeutet, ein Schmiermittelsensor 12 in der Schmiermittelquelle 6 vorgesehen sein, der erfasst, wenn das Schmiermittel in der Schmiermittelquelle 6 zur Neige geht.

Der Schmiermittelsensor 12 und/oder der Drucksensor 18 kann/können mit einer Warneinrichtung 19 verbunden sein, die einen unzulässig reduzierten Schmiermittelvorrat in der Schmiermittelquelle 6 anzeigt. Die Warneinrichtung 19 kann beispielsweise im Fahrerraum oder an der Zugkupplung vorgesehen sein.

Bei den Schmierstellen, die über den Schmiermittelverteiler 8 versorgt werden, handelt es sich insbesondere um punktförmige oder linienförmige Schmierstellen, die jeweils mit wenigstens einem Punktschmiermittelgeber 16 mit Schmiermittel versorgt werden. Dies ist jedoch nicht zwingend.

In der Figur 5 ist beispielsweise eine stirnseitige Draufsicht auf die Stirnplatte 25 des Kupplungskopfes 2 gezeigt. Dabei wird der Kuppelverschluss 26 im Trichter der Stirnplatte 25 mit einem Schmiermittelsprühkopf 15 mit Schmiermittel aus einer separaten Schmiermittelquelle 6 versorgt. Demgemäß wird eine vergleichsweise große Fläche besprüht.

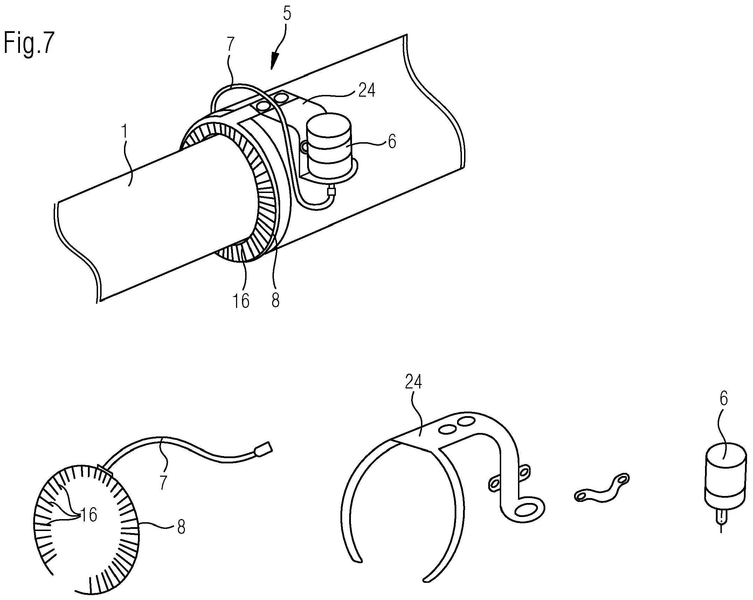

Bei der Figur 7 hingegen ist eine Vielzahl von Punktschmiermittelgebern 16 gezeigt, die in Umfangsrichtung hintereinander um die Kupplungsstange 1 positioniert sind, um einen linienförmigen Bereich zu schmieren. Die Punktschmiermittelgeber 16 sind über einen entsprechenden ringförmigen Schmiermittelverteiler 8 an einer Schmiermittelleitung 7 angeschlossen, die Schmiermittel aus der Schmiermittelquelle 6 führt. Der Schmiermittelverteiler 8 ist an einer Halterung 24 befestigt, die auch die Schmiermittelquelle 6, bevorzugt austauschbar, trägt. Die Schmiermittelquelle 6 kann beispielsweise als druckbeaufschlagte Kartusche ausgeführt sein.

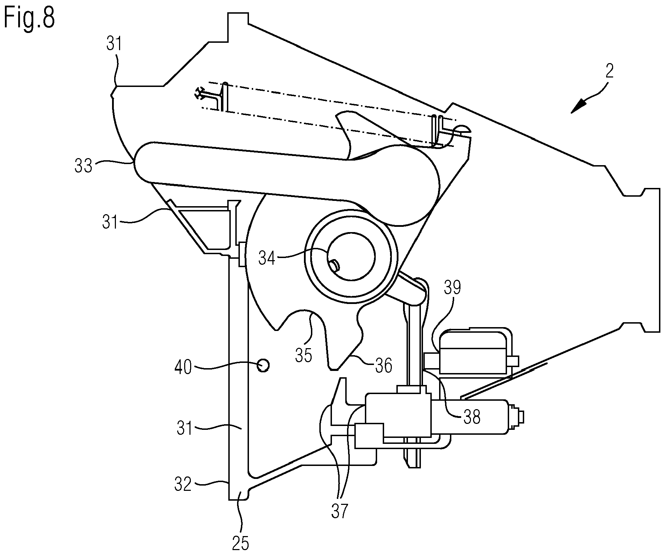

In der Figur 8 sind exemplarisch Schmierstellen, die mit der erfindungsgemäßen Schmiereinrichtung 5 geschmiert werden können und die nur im Bereich des Kupplungskopfes 2 vorgesehen sind, gezeigt. Die Schmierstellen sind die folgenden:
- 31 -: Führungsflächen in Kegel und Trichter
- 32 -: Stirnfläche der Stirnplatte 25
- 33 -: Steg der Kuppelöse
- 34 -: Umfangsfläche des Hauptbolzens
- 35 -: Hakenmaul des Herzstückes
- 36 -: Rückseite des Herzstückes
- 37 -: Druckfläche der Stempelführung
- 38 -: Federlager
- 39 -: Rückseite der Klinkenstange
- 40 -: Entwässerungsbohrungen, die offen gehalten werden müssen und entsprechend mit einem Schmiermittel und/oder Reinigungsmittel beaufschlagt werden können.

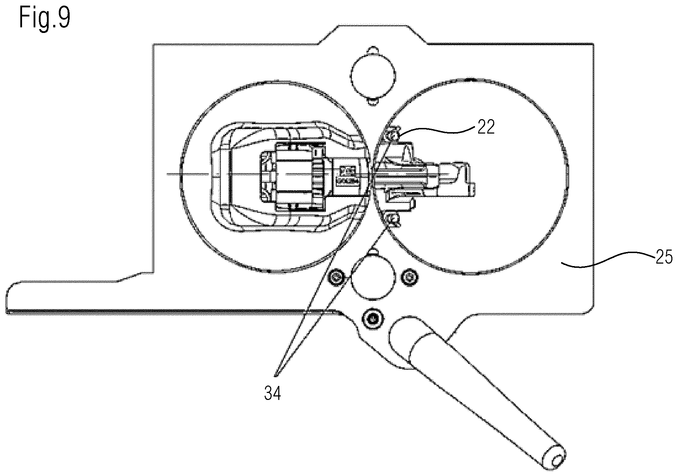

In der Figur 9 ist nochmals exemplarisch die Schmierstelle 34 des Hauptbolzens 22 in einer Frontansicht auf die Stirnplatte 25 gezeigt.

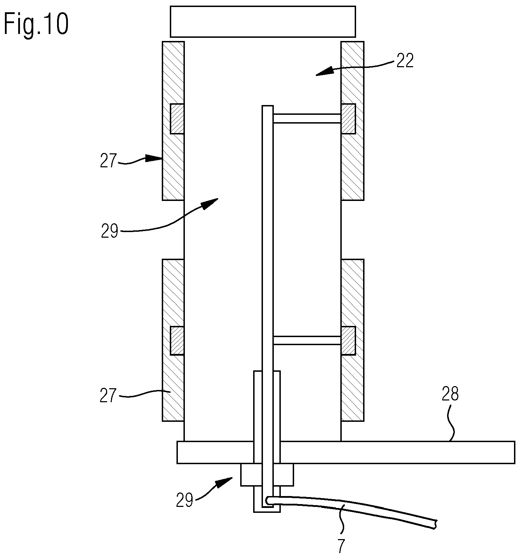

Die Figur 10 zeigt eine schematische Ansicht für die Schmierung des Hauptbolzens 22. Dieser ist in wenigstens einer Buchse 27 gelagert und über einen Entkuppelhebel 28 zum Lösen zweier mechanischer Kupplungen betätigbar.

In den Hauptbolzen 22 ist ein Schmierkanal 29 integriert, der über eine Schmiermittelleitung 7 mit Schmiermittel versorgt wird. Der Schmierkanal 29 erstreckt sich beispielsweise stirnseitig in den Hauptbolzen 22 hinein in dessen Längsrichtung und weist radiale Abzweige zum Schmieren der Umfangsfläche zwischen dem Hauptbolzen 22 und der wenigstens einen Buchse 27 auf.

Wie dargestellt, kann die Buchse 27 eine radial innere Umfangsaussparung aufweisen, um das Schmiermittel besser über den Umfang des Hauptbolzens 22 zu verteilen.

Auch ist es möglich, in der Axialrichtung des Hauptbolzens 22 zwischen zwei Buchsen 27 eine freiliegende Oberfläche des Hauptbolzens 22 mit Schmiermittel zu schmieren, beispielsweise durch Besprühen, wie dies zuvor dargestellt wurde.

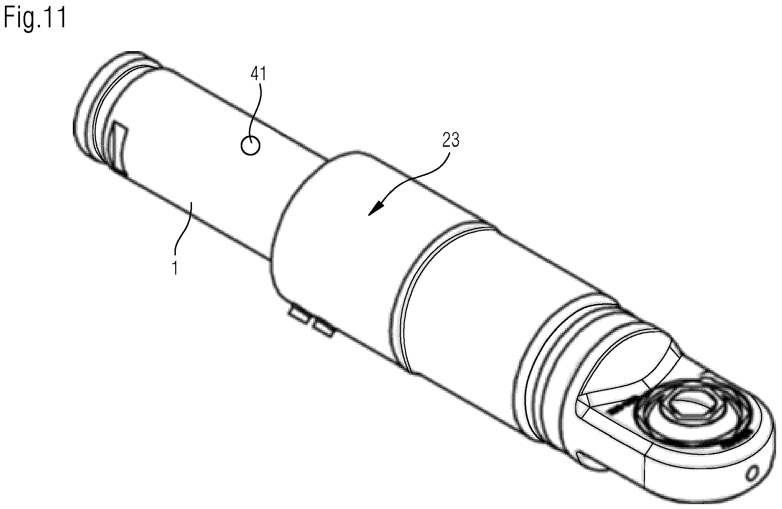

In der Figur 11 ist wiederum eine vorteilhafte Position eines Schmierpunktes 41 gezeigt, der jedoch insbesondere mit einem Schmiermittelsprühkopf 15, wie beispielsweise in der Figur 3 gezeigt, erzeugt werden kann, um die Kupplungsstange 1 in einem Bereich zu schmieren, der teleskopisch ein und ausfährt, wenn das Energieverzehrelement 23 betätigt wird.

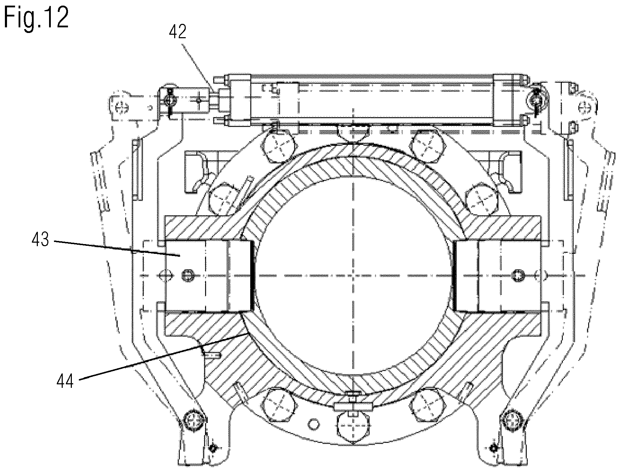

In der Figur 12 sind weitere Schmierstellen, die erfindungsgemäß geschmiert werden können, gezeigt. 42 bezeichnet hierbei die Kolbenstange eines Verriegelungszylinders, 43 Laufflächen der Verriegelungsbolzen und 44 Laufflächen des Innenrohres.

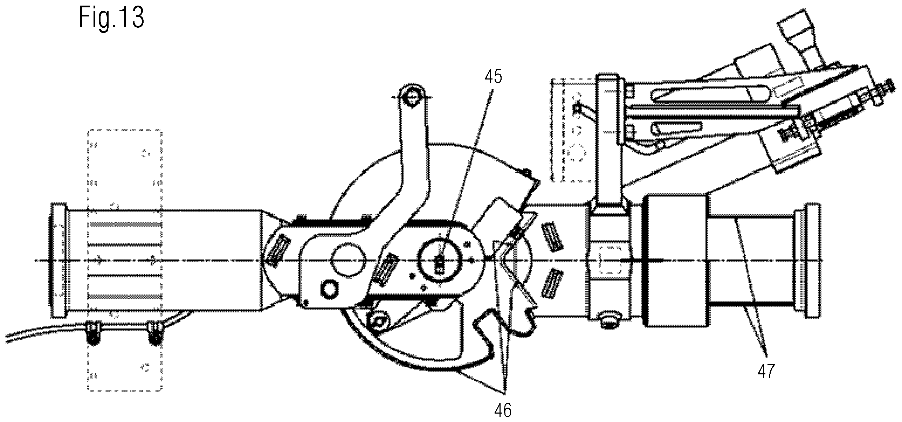

Auch in der Figur 13 sind vorteilhafte Schmierstellen gezeigt, die erfindungsgemäß geschmiert werden können. Hierbei handelt es sich um das Bolzenlager 45 des Hauptbolzens in einem Knickgelenk, wobei die Schmierung insbesondere über Kegelschmiernippel erfolgt, ferner um Gleitflächen 46 der Rastung und der Laufbahn des Riegels im Knickgelenk und um Gleitflächen 47 des regenerativen Energieverzehrelementes.

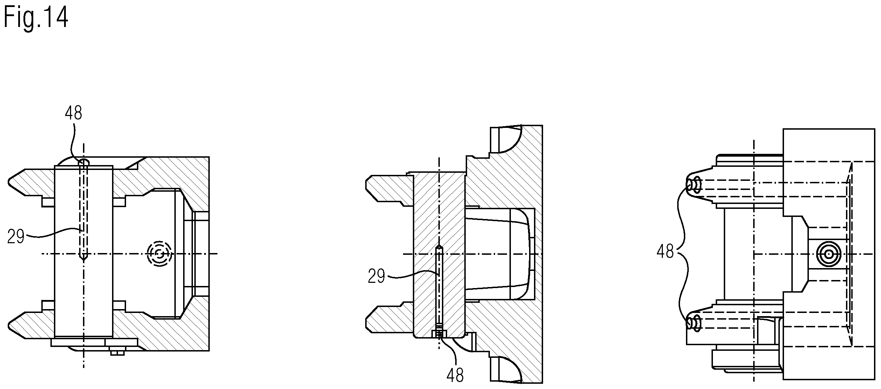

In der Figur 14 sind beispielhafte Schmierstellen im Lagerbock 3 gezeigt. Die Schmierstellen werden über eine nicht näher dargestellte Schmiermittelquelle und Schmiermittelleitung, die an Schmiernippeln 48 angeschlossen sind, versorgt. Es kann wiederum ein Schmierkanal 29 im Bolzen vorgesehen sein, sowie eine Schmiermittelversorgung für die Umfangsflächen über radial positionierte Schmiernippel 48.

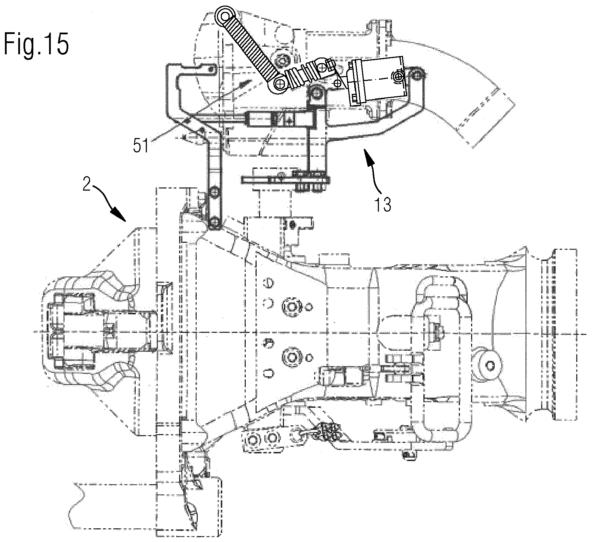

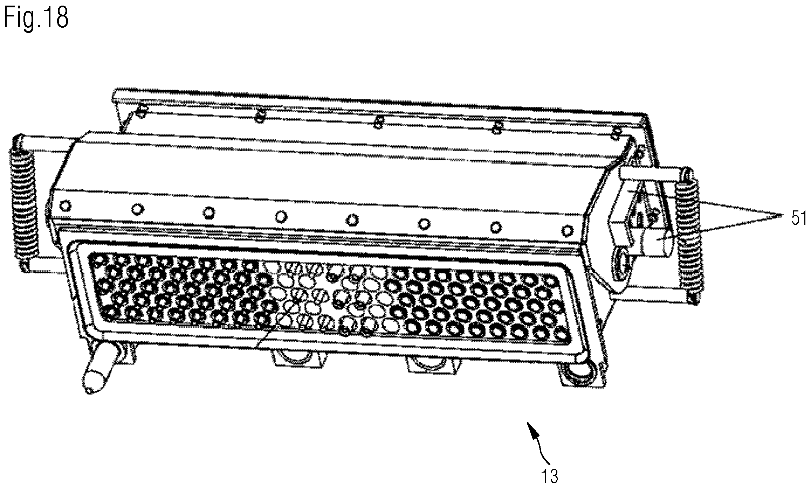

Gemäß der Darstellung in der Figur 15 werden die Klappenführungen 51 an der am Kupplungskopf 2 angeordneten Elektrokupplung 13 geschmiert. Dies ist auch in der Figur 18 nochmals in einer Draufsicht schräg von vorne auf die Elektrokupplung 13 gezeigt.

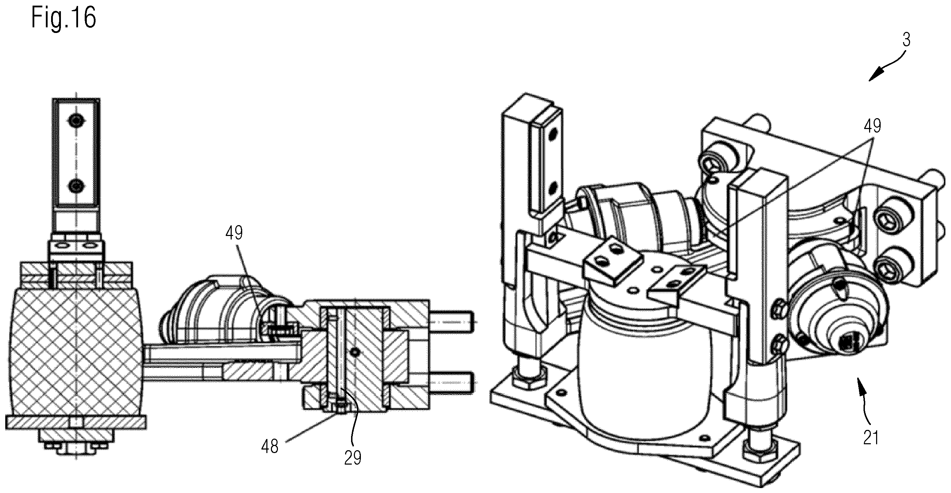

Gemäß der Darstellung in der Figur 16 werden die Laufflächen 49 der Kurvenscheiben an einer Mittenstellung 21 und Abstützung, die im Bereich des Lagerbockes 3 vorgesehen ist, erfindungsgemäß geschmiert. Zur Schmierung der Lagerung des Bolzens kann wiederum ein Schmierkanal 29 vorgesehen sein, der über einen Schmiernippel 48 mit Schmiermittel aus einer erfindungsgemäßen Schmiereinrichtung versorgbar ist.

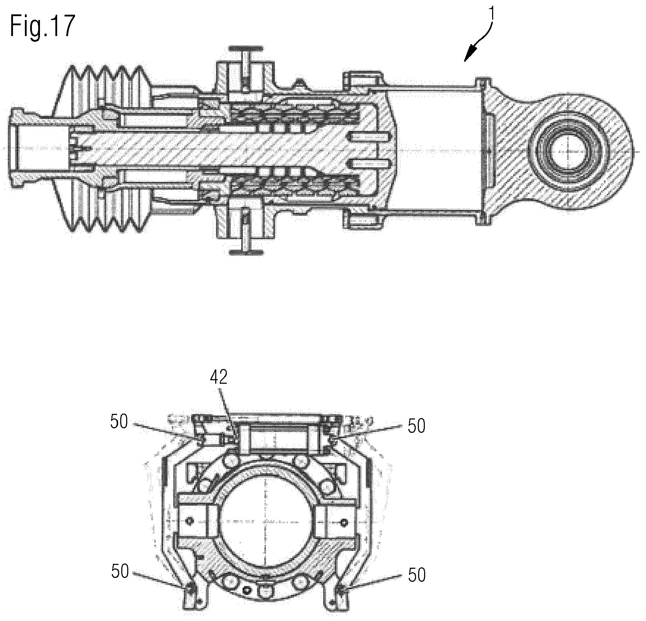

Bei der Kupplungsstange 1 gemäß der Figur 17 werden die Gelenkpunkte 50 der Verriegelung als Schmierstellen erfindungsgemäß geschmiert. Zur weiteren Erläuterung der Verriegelung wird auf die Figur 12 verwiesen. Ferner ist nochmals die Schmierstelle an der Kolbenstange 42 des Verriegelungszylinders gezeigt.

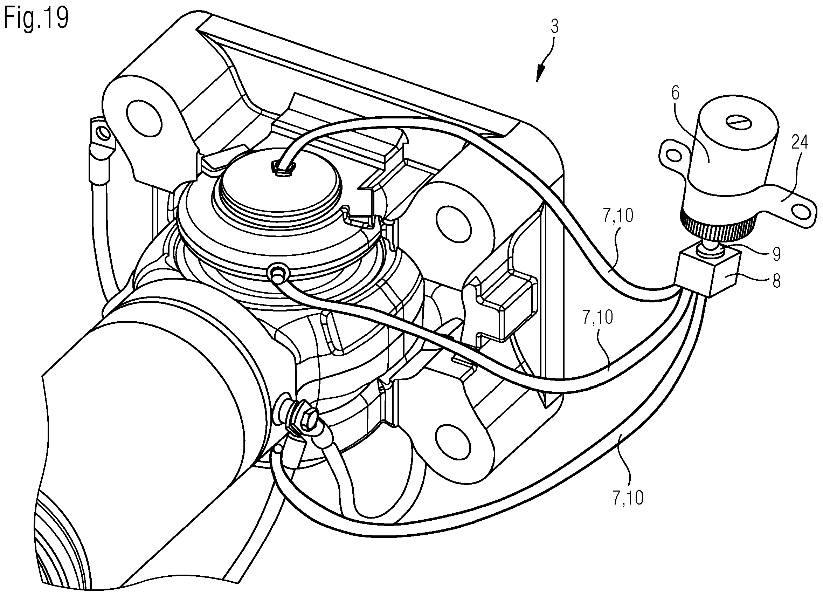

In der Figur 19 ist nochmals schematisch dargestellt, wie im Bereich des Lagerbockes 3 verschiedene Schmierstellen aus einer gemeinsamen Schmiermittelquelle 6 geschmiert werden. Hierfür ist ein Schmiermittelverteiler 8, im gezeigten Ausführungsbeispiel unmittelbar im Bereich der Schmiermittelquelle 6, vorgesehen, der verschiedene Schmiermittelleitungen 7 als Schmiermittelableitungen 10 speist, um das Schmiermittel zu den verschiedenen Schmiermittelstellen zu führen.

### Bezugszeichenliste

- 1: Kupplungsstange
- 2: Kupplungskopf
- 3: Lagerbock
- 4: Anschlussende
- 5, 5': Schmiereinrichtung
- 6.6': Schmiermittelquelle
- 7: Schmiermittelleitung
- 8: Schmiermittelverteiler
- 9: Schmiermittelzuleitung
- 10: Schmiermittelableitung
- 11: Steuervorrichtung
- 12: Schmiermittelsensor
- 13: Elektrokupplung
- 14: Luftkupplung
- 15: Schmiermittelsprühkopf
- 16: Punktschmiermittelgeber
- 17: Heizeinrichtung
- 18: Drucksensor
- 19: Warneinrichtung
- 20: Schutzgehäuse
- 21: Mittenrückstellung
- 22: Hauptbolzen
- 23: Energieverzehrelement
- 24: Halterung
- 25: Stirnplatte
- 26: Kuppelverschluss
- 27: Buchse
- 28: Entkuppelhebel
- 29: Schmierkanal
- 31-: Führungsflächen in Kegel und Trichter
- 32-: Stirnfläche der Stirnplatte 25
- 33-: Steg der Kuppelöse
- 34-: Umfangsfläche des Hauptbolzens
- 35-: Hakenmaul des Herzstückes
- 36-: Rückseite des Herzstückes
- 37-: Druckfläche der Stempelführung
- 38-: Federlager
- 39-: Rückseite der Klinkenstange
- 40-: Entwässerungsbohrungen, die offen gehalten werden müssen und entsprechend mit einem Schmiermittel und/oder Reinigungsmittel beaufschlagt werden können.
- 41: Schmierpunkt
- 42: Kolbenstange des Verriegelungszylinders
- 43: Laufflächen der Verriegelungsbolzen
- 44: Laufflächen des Innenrohres
- 45: Bolzenlager des Hauptbolzens im Knickgelenk
- 46: Gleitflächen der Rastung und der Laufbahn des Riegels im Knickgelenk
- 47: Gleitflächen des regenerativen Energieverzehrelementes
- 48: Schmiernippel
- 49: Laufflächen der Kurvenscheiben
- 50: Gelenkpunkte
- 51: Klappenführung an Elektrokupplung
- 52: Fahrzeug
- 53: Hauptschmierleitung
- 54: Schmiermittelbereitstellungssystem
- 55: Serviceeinheit
- 100: Zugkupplung

## Patentansprüche

1. Zugkupplung (100) mit einer Kupplungsstange (1) und einem von dieser getragenen Kupplungskopf (2);
wobei sich die Kupplungsstange (1) in einer Axialrichtung (x) von einem Anschlussende (4) zu dem Kupplungskopf (2) erstreckt und im Bereich des Anschlussendes (4) verschwenkbar auf einem Lagerbock (3) der Zugkupplung zum Anbringen an ein schienengebundenes Fahrzeug (52) gelagert ist;
mit einer Schmiereinrichtung (5, 5', 54), umfassend wenigstens eine Schmiermittelquelle (6, 6') und wenigstens eine an der Schmiermittelquelle (6, 6') schmiermittelleitend angeschlossene Schmiermittelleitung (7), zum Schmieren von Stoßstellen und/oder Bewegungsstellen in der Zugkupplung (100);
**dadurch gekennzeichnet, dass**
mit der wenigstens einen Schmiereinrichtung (5, 5', 54) Stoßstellen und/oder Bewegungsstellen von verschiedenen Komponenten der Zugkupplung (100) aus der folgenden Gruppe von Komponenten geschmiert werden:
- Kupplungsstange (1)
- Kupplungskopf (2)
- Lagerbock (3),
wobei wenigstens eine gemeinsame Schmiermittelquelle (6, 6') zur Schmierung von Stoßstellen und/oder Bewegungsstellen verschiedener Komponenten der Gruppe von Komponenten vorgesehen ist und die gemeinsame Schmiermittelquelle (6, 6') an einer der Komponenten oder an der Anschlussumgebung des Lagerbockes (3) am schienengebundenen Fahrzeug (52), insbesondere Wagen angeordnet ist und zwischen der wenigstens einen Schmiermittelquelle (6, 6') und verschiedenen Stoßstellen und/oder Bewegungsstellen einer Komponente und/oder verschiedener Komponenten wenigstens ein Schmiermittelverteiler (8) mit wenigstens einer Schmiermittelzuleitung (9) und einer vergleichsweise größeren Anzahl von Schmiermittelableitungen (10) vorgesehen ist.

2. Zugkupplung (100) gemäß Anspruch 1, **dadurch gekennzeichnet, dass** je Komponente aus der Gruppe von Komponenten jeweils wenigstens eine Schmiermittelquelle (6, 6') vorgesehen ist.

3. Zugkupplung (100) gemäß Anspruch 2, **dadurch gekennzeichnet, dass** die jeweilige Schmiermittelquelle (6, 6') an der jeweiligen Komponente befestigt oder in die jeweilige Komponente integriert ist.

4. Zugkupplung (100) gemäß einem der Ansprüche 2 oder 3, **dadurch gekennzeichnet, dass** die Schmiermittelquellen (6, 6') mit den jeweils daran angeschlossenen Schmiermittelleitungen (7) verschiedener Komponenten voneinander getrennt sind.

5. Zugkupplung (100) gemäß einem der Ansprüche 1 bis 4, **dadurch gekennzeichnet, dass** wenigstens eine Steuervorrichtung (11) vorgesehen ist, welche eingerichtet ist, die Schmiermittelabgabe aus der wenigstens einen Schmiermittelquelle (6, 6') zu steuern, sodass die Schmiermittelabgabe kontinuierlich erfolgt.

6. Zugkupplung (100) gemäß einem der Ansprüche 1 bis 5, **dadurch gekennzeichnet, dass** wenigstens eine Steuervorrichtung (11) vorgesehen ist, welche eingerichtet ist, die Schmiermittelabgabe aus der wenigstens einen Schmiermittelquelle (6, 6') zu steuern, sodass die Schmiermittelabgabe in regelmäßigen Intervallen oder diskontinuierlich in Abhängigkeit einer Bedarfsanforderung, die insbesondere durch einen an der jeweiligen Stoßstelle und/oder Bewegungsstelle angeschlossenen, einen Schmiermittelzustand an der Stoßstelle und/oder Bewegungsstelle erfassenden Schmiermittelsensor (12) und/oder durch einen Drucksensor (18) in einer Schmiermittelleitung (7) erzeugt wird, erfolgt.

7. Zugkupplung (100) gemäß einem der Ansprüche 1 bis 6, **dadurch gekennzeichnet, dass** die Stoßstellen und/oder Bewegungsstellen wenigstens mehrere oder alle der folgenden Stellen umfasst:
- eine oder mehrere Gelenke oder Drehstellen zwischen zwei Bauteilen der Zugkupplung (100);
- eine oder mehrere Bewegungsstellen zwischen zwei relativ zueinander in der Axialrichtung (x) oder senkrecht oder winklig hierzu beweglichen Bauteilen;
- eine oder mehrere Bewegungsstellen zwischen zwei relativ zueinander in Umfangsrichtung zu der Axialrichtung (x) beweglichen Bauteilen;
- eine oder mehrere Bewegungsstellen an Betätigungsmechanismen einer oder mehrerer in den Kupplungskopf (2) integrierter Komponenten wie eine Elektrokupplung (13) und/oder eine Luftkupplung (14);
- eine oder mehrere Außenflächen an einer oder mehrerer Komponenten;
- eine oder mehrere Innenflächen an einer oder mehreren Komponenten;
- einen oder mehrere Innenräume.

8. Zugkupplung (100) gemäß einem Ansprüche 1 bis 7, **dadurch gekennzeichnet, dass** die Schmiereinrichtung (5, 5', 54) wenigstens einen Schmiermittelsprühkopf (15) zum Besprühen einer Fläche mit Schmiermittel umfasst.

9. Zugkupplung (100) gemäß Anspruch 8, **dadurch gekennzeichnet, dass** die Schmiermitteleinrichtung (5, 5', 54) ferner wenigstens einen Punktschmiermittelgeber (16) zur Abgabe von Schmiermittel in einem punktförmigen oder linienförmigen Bereich umfasst.

10. Zugkupplung (100) gemäß einem der Ansprüche 1 bis 9, **dadurch gekennzeichnet, dass** die wenigstens eine Schmiermittelquelle (6) eine Heizeinrichtung (17) zum Aufheizen des Schmiermittels umfasst.

11. Zugkupplung (100) gemäß einem der Ansprüche 1 bis 10, **dadurch gekennzeichnet, dass** die Schmiereinrichtung (5, 5', 54) wenigstens einen Drucksensor (18) umfasst, der einen Schmiermitteldruck in der Schmiermittelquelle (6) oder einer Schmiermittelleitung (7), insbesondere unmittelbar vor oder im Bereich des Schmiermittelverteilers (8), erfasst.

12. Zugkupplung (100) gemäß einem der Ansprüche 1 bis 11, **dadurch gekennzeichnet, dass** eine Warneinrichtung (19) vorgesehen ist, die eingerichtet ist, insbesondere aus von dem Drucksensor (18) übermittelten Signalen, einen Nachfüllbedarf der wenigstens einen Schmiermittelquelle (6) und/oder einen Fehlzustand der Schmiereinrichtung (5) anzuzeigen.

13. Zugkupplung (100) gemäß einem der Ansprüche 1 bis 12, **dadurch gekennzeichnet, dass** die Zugkupplung (100) in Form wenigstens eines der folgenden Kupplungstypen ausgeführt ist:
- Mittelpufferkupplung
- automatische Zugkupplung
- AAR-Kupplung
- Kupplung mit Willison-Profil
- Knickkupplung
- teleskopierbare Kupplung.

## Claims

1. Train coupling (100) having a coupling bar (1) and having a coupling head (2) which is supported thereby;
wherein the coupling bar (1) extends in an axial direction (x) from a connection end (4) to the coupling head (2) and, in the region of the connection end (4), is mounted pivotably on a bearing block (3) of the train coupling for attachment to a rail-borne vehicle (52);
having a lubricating device (5, 5', 54), comprising at least one lubricant source (6, 6') and at least one lubricant line (7) connected in a lubricant-conducting manner to the lubricant source (6, 6'), for lubrication of joints and/or movement points in the train coupling (100);
**characterized in that**,
by way of the at least one lubricating device (5, 5', 54), joints and/or movement points of different components of the train coupling (100) from the following group of components are lubricated:
- coupling bar (1)
- coupling head (2)
- bearing block (3),
wherein provision is made of at least one common lubricant source (6, 6') for lubrication of joints and/or movement points of different components of the group of components, and the common lubricant source (6, 6') is arranged on one of the components or in the connection surroundings of the bearing block (3) on the rail-borne vehicle (52), in particular carriage, and, between the at least one lubricant source (6, 6') and different joints and/or movement points of a component and/or different components, provision is made of at least one lubricant distributor (8) with at least one lubricant feed line (9) and with a relative large number of lubricant discharge lines (10).

2. Train coupling (100) according to Claim 1, **characterized in that**, for each component from the group of components, provision is made of in each case at least one lubricant source (6, 6').

3. Train coupling (100) according to Claim 2, **characterized in that** the respective lubricant source (6, 6') is fastened to the respective component or integrated into the respective component.

4. Train coupling (100) according to either of Claims 2 and 3, **characterized in that** the lubricant sources (6, 6') with the respectively connected lubricant lines (7) of different components are separated from one another.

5. Train coupling (100) according to one of Claims 1 to 4, **characterized in that** provision is made of at least one control apparatus (11) which is configured to control the lubricant discharge from the at least one lubricant source (6, 6') such that the lubricant discharge is realized in a continuous manner.

6. Train coupling (100) according to one of Claims 1 to 5, **characterized in that** provision is made of at least one control apparatus (11) which is configured to control the lubricant discharge from the at least one lubricant source (6, 6') such that the lubricant discharge is realized at regular intervals or in a discontinuous manner according to a demand request which is generated in particular by a lubricant sensor (12), connected to the respective joint and/or movement point and detecting a lubricant state at the joint and/or movement point, and/or by a pressure sensor (18) in a lubricant line (7).

7. Train coupling (100) according to one of Claims 1 to 6, **characterized in that** the joints and/or movement points comprise at least a plurality or all of the following points:
- one or more articulations or rotation points between two components of the train coupling (100);
- one or more movement points between two components which are movable relative to one another in the axial direction (x) or perpendicularly or at an angle thereto;
- one or more movement points between two components which are movable relative to one another in a circumferential direction in relation to the axial direction (x);
- one or more movement points at actuating mechanisms of one or more components integrated into the coupling head (2), such as an electrical coupling (13) and/or a pneumatic coupling (14);
- one or more outer surfaces on one or more components;
- one or more inner surfaces on one or more components;
- one or more interior spaces.

8. Train coupling (100) according to one of Claims 1 to 7, **characterized in that** the lubricating device (5, 5', 54) comprises at least one lubricant spray head (15) for spraying a surface with lubricant.

9. Train coupling (100) according to Claim 8, **characterized in that** the lubricating device (5, 5', 54) furthermore comprises at least one lubricant dispenser (16) for spot lubrication for discharging lubricant in a punctiform or linear region.

10. Train coupling (100) according to one of Claims 1 to 9, **characterized in that** the at least one lubricant source (6) comprises a heating device (17) for heating the lubricant.

11. Train coupling (100) according to one of Claims 1 to 10, **characterized in that** the lubricating device (5, 5', 54) comprises at least one pressure sensor (18) which detects a lubricant pressure in the lubricant source (6) or a lubricant line (7), in particular immediately in front of or in the region of the lubricant distributor (8).

12. Train coupling (100) according to one of Claims 1 to 11, **characterized in that** provision is made of a warning device (19) which is configured to indicate a need for topping up the at least one lubricant source (6) and/or a fault state of the lubricant line (5), in particular on the basis of signals transmitted from the pressure sensor (18).

13. Train coupling (100) according to one of Claims 1 to 12, **characterized in that** the train coupling (100) is in the form of at least one of the following types of coupling:
- centre buffer coupling
- automatic train coupling
- AAR coupling
- coupling with Willison profile
- articulated coupling
- telescopic coupling.

## Revendications

1. Attelage de traction (100) avec une tige d'attelage (1) et une tête d'attelage (2) supportée par celle-ci ;
dans lequel la tige d'attelage (1) s'étend dans une direction axiale (x) d'une extrémité de raccordement (4) à la tête d'attelage (2) et est logée, au niveau de l'extrémité de raccordement (4), de manière pivotante sur un palier (3) de l'attelage de traction pour un montage sur un véhicule ferroviaire (52) ;
avec un dispositif de lubrification (5, 5', 54) comprenant au moins une source de lubrifiant (6, 6') et au moins une conduite de lubrifiant (7) raccordée à la source de lubrifiant (6, 6'), pour la lubrification de points d'aboutage et/ou de points de mouvement dans l'attelage de traction (100) ;
**caractérisé en ce que**
l'au moins un dispositif de lubrification (5, 5', 54) permet de lubrifier les points d'aboutage et/ou points de mouvement des différents composants de l'attelage de traction (100) du groupe de composants suivant :
- tige d'attelage (1)
- tête d'attelage (2)
- palier (3),
dans lequel au moins une source de lubrifiant commune (6, 6') est conçue pour la lubrification de points d'aboutage et/ou points de mouvement de différents composants du groupe de composants et la source de lubrifiant commune (6, 6') est disposée au niveau d'un des composants ou de l'environnement de raccordement du palier (3) sur le véhicule ferroviaire (52), plus particulièrement un wagon, et, entre l'au moins une source de lubrifiant (6, 6') et les différents points d'aboutage et/ou points de mouvement d'un composant et/ou de différents composants, est prévu au moins un distributeur de lubrifiant (8) avec une conduite d'alimentation en lubrifiant (9) et un nombre comparativement plus grand de conduites d'évacuation de lubrifiant (10).

2. Attelage de traction (100) selon la revendication 1, **caractérisé en ce que**, pour chaque composant du groupe de composants est prévu au moins une source de lubrifiant (6, 6').

3. Attelage de traction (100) selon la revendication 2, **caractérisé en ce que** la source de lubrifiant (6, 6') correspondante est fixée au composant correspondant ou est intégrée dans le composant correspondant.

4. Attelage de traction (100) selon l'une des revendications 2 ou 3, **caractérisé en ce que** les sources de lubrifiant (6, 6'), avec les conduites de lubrifiant (7) des différents composants, qui y sont raccordées, sont séparées entre elles.

5. Attelage de traction (100) selon l'une des revendications 1 à 4, **caractérisé en ce qu'**au moins un dispositif de commande (11) est prévu, qui est conçu pour contrôler la distribution du lubrifiant à partir de l'au moins une source de lubrifiant (6, 6'), de façon à ce que la distribution du lubrifiant ait lieu en continu.

6. Attelage de traction (100) selon l'une des revendications 1 à 5, **caractérisé en ce qu'**au moins un dispositif de commande (11) est prévu, qui est conçu pour contrôler la distribution du lubrifiant, de façon à ce que la distribution du lubrifiant ait lieu à intervalles réguliers ou de manière discontinue en fonction de la demande, qui est générée plus particulièrement par un capteur de lubrifiant (12) raccordé au point d'aboutage et/ou au point de mouvement correspondant, mesurant un état du lubrifiant au niveau du point d'aboutage et/ou du point de mouvement et/ou par un capteur de pression (18) dans une conduite de lubrifiant (7).

7. Attelage de traction (100) selon l'une des revendications 1 à 6, **caractérisé en ce que** les points d'aboutage et/ou les points de mouvement comprennent au moins plusieurs des points ou tous les points suivants :
- une ou plusieurs articulations ou points de rotation entre deux composants de l'attelage de traction (100) ;
- un ou plusieurs points de mouvement entre deux composants mobiles l'un par rapport à l'autre dans la direction axiale (x) ou perpendiculairement ou avec un angle par rapport à celui-ci ;
- un ou plusieurs points de mouvement entre deux composants mobiles l'un par rapport à l'autre dans la direction circonférentielle à la direction axiale (x) ;
- un ou plusieurs points de mouvement sur des mécanismes d'actionnement d'un ou plusieurs composants intégrés dans la tête d'attelage (2), comme un couplage électrique (13) et/ou un couplage pneumatique (14) ;
- une ou plusieurs faces externes sur un ou plusieurs composants ;
- une ou plusieurs faces internes sur un ou plusieurs composants ;
- un ou plusieurs espaces internes.

8. Attelage de traction (100) selon l'une des revendications 1 à 7, **caractérisé en ce que** le dispositif de lubrification (5, 5', 54) comprend au moins une tête de pulvérisation de lubrifiant (15) pour la pulvérisation d'une surface avec du lubrifiant.

9. Attelage de traction (100) selon la revendication 8, **caractérisé en ce que** le dispositif de lubrification (5, 5', 54) comprend en outre au moins un distributeur de lubrifiant ponctuel (16) pour la distribution de lubrifiant dans une zone ponctuelle ou linéaire.

10. Attelage de traction (100) selon l'une des revendications 1 à 9, **caractérisé en ce que** l' au moins une source de lubrifiant (6) comprend un dispositif de chauffage (17) pour le chauffage du lubrifiant.

11. Attelage de traction (100) selon l'une des revendications 1 à 10, **caractérisé en ce que** le dispositif de lubrification (5, 5', 54) comprend au moins un capteur de pression (18) qui mesure une pression de lubrifiant dans la source de lubrifiant (6) ou une conduite de lubrifiant (7), plus particulièrement directement avant ou au niveau du distributeur de lubrifiant (8).

12. Attelage de traction (100) selon l'une des revendications 1 à 11, **caractérisé en ce qu'**un dispositif d'alerte (19) est prévu, qui est conçu pour afficher, plus particulièrement à partir de signaux transmis par le capteur de pression (18), un besoin de remplissage de l'au moins une source de lubrifiant (6) et/ou un défaut du dispositif de lubrification (5).

13. Attelage de traction (100) selon l'une des revendications 1 à 12, **caractérisé en ce que** l'attelage de traction est réalisé sous la forme d'au moins un des types d'attelage suivants :
- attelage à tampon central
- attelage de traction automatique
- attelage AAR
- attelage avec profilé Willison
- attelage articulé
- attelage télescopique.
